Europäisches Patentamt

European Patent Office

Office européen des brevets

(11) Publication number: **0 112 546**
A1

# EUROPEAN PATENT APPLICATION

(21) Application number: **83112819.4**

(22) Date of filing: **20.12.83**

(51) Int. Cl.³: **G 05 G 3/00**

(30) Priority: **27.12.82 US 453403**

(43) Date of publication of application: **04.07.84**
Bulletin 84/27

(84) Designated Contracting States: **DE FR GB**

(71) Applicant: **MASSEY-FERGUSON SERVICES N.V.,
Abraham de Veerstraat 7A, Curaçao Netherlands Antilles
(NL)**

(72) Inventor: **Burdett, Stephen D., 2859 Woodcreek Way,
Bloomfield Hills Michigan 48013 (US)**
Inventor: **Buback, John, 733 Synnybeach, Pontiac
Michigan 48054 (US)**

(74) Representative: **Jones, David Bryn, Massey-Ferguson
Stareton near Kenilworth, Warwickshire CV8 2LJ (GB)**

(54) **Shift fork.**

(57) A shift fork construction for use with a change gear transmission of the type having a shift rail (44) and a shiftable hub (28) provided with a disc-like peripheral portion (40). The shift fork includes an element (50) of generally semi-circular form having diametrically opposed ends portions (52, 54) on which a pair of shift fork pads (60) are pivotally mounted by pins (64). Each of the shift fork pads (60) includes a groove (66) extending the length of the pad which receives the disc-like peripheral portion (40) and each groove is wider at one end that the other to promote lubricant flow into the groove. Pivot-limiting pins (82) engaged in arcuate slots (84) in the pads prevent undue pivotting of the pads relative to the semicircular element (50). Each of the pads (60) is preferably made of bronze whilst the element (50) is made of a higher strength material such as steel.

EP 0 112 546 A1

ACTORUM AG

## SHIFT FORK

### Technical Field

The present invention relates generally to shift forks for change gear transmissions and, more particularly, to a shift fork capable of use with a shiftable hub having a disc-like peripheral portion.

### Background Art

Shift forks are well known in the art for shifting gears within transmissions and typical examples are shown in U.S. patents 2,442,660 and 2,294,230. It should be noted that shift forks can be associated with disc-like elements within a transmission for shifting the gears, the disc either being provided with a groove, as shown in US patent 2,442,660, in which case the shift fork is provided with a pad which rides in the groove. Alternatively, the disc-like element can be relatively narrow, in which case the shift fork, such as the type shown in US patent 3,078,975 is provided with a groove which surrounds the element. This last type of shift fork is customarilly utilized in transmissions having pin-type synchronizers, one example being illustrated in US Patent 4,125,179. Another such pin-type synchronizer is illustrated in the Applicants co-pending International Application PCT/EP 83/00002, the subject matter which application is incorporated herein by reference thereto.

It has been found that the grooved shift fork arrangement described above can suffer from a number of problems such as a high wear rate of the grooved portion of the shift fork, poor lubrication of the shift fork groove and assembly difficulties.

Disclosure of Invention

It is an object of this invention to provide an improved form of shift fork which at least mitigates the disadvantages of the prior art constructions referred to above.

Thus according to the present invention there is provided a shift fork for use with a sliding sleeve having a disc like peripheral portion; said fork comprising:

a generally semicircular element having diametrically opposed end portions;
shift rail mounting means carried by the element between its end portions, said shift rail mounting means being capable of securing the element to a shift rail or the like;
said fork being characterised by the provision of a pair of shift fork pads, each being provided with a groove extending the length of the pad and open to one side thereof, said groove being wider at one end than the other; and
pad mounting means capable of mounting each one of said pair of pads on one of the end portions with said one side of the pads facing each other.

The pad mounting means preferably pivotally mounts the pads on said opposed end portions.

Preferably pivot-limiting means extend between each of the pads and the associated end portion to limit the pivotal movement of the pad with respect to the end portion.

Conveniently the pivot-limiting means comprises a pin carried by the end portion which engages an arcuate slot in the pad.

The generally semicircular element may be made of a relatively high strength material and said pad of a material having good bearing qualities.


Brief Description of Drawings

Figure 1 is a longitudinal cross-sectional view through a portion of a synchronizer, this view also illustrating first and second portions of the shift fork of this invention, the pad portion of the shift fork being shown rotated approximately 90 degrees above the axis of the synchronizer from that position which it would normally occupy.

Figure 2 is a side view of the shaft fork of Figure 1.

Figure 3 is a perspective view of the shift fork pad.

Figure 4 is a side view of the shift fork pad.

Figure 5 is a view taken generally along the line 5-5 in Figure 4, a portion of the disc with which the shift fork pad is associated, being shown in phantom.

Best Mode of Carrying Out Invention

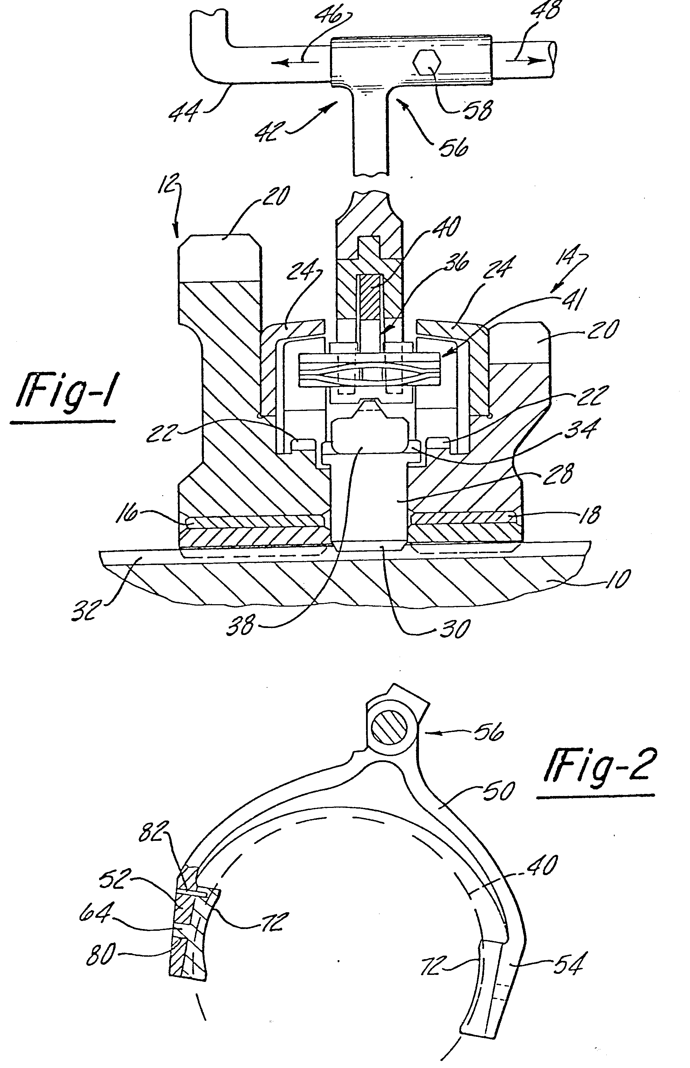

Referring first to Figure 1, a transmission shaft 10 is illustrated, a pair of gear assemblies indicated generally at 12 and 14, being rotatably mounted thereon. In the transmission, each of these gears is in constant mesh with another gear (not shown) which is fixed to a further shaft parallel to the first shaft 10. Each of the gear assemblies 12,14 is journalled on the shaft 10 by bearing sleeves 16,18 respectively and each gear assembly includes gear teeth 20 and clutch teeth 22. Also mounted on each of the gear assemblies 12 and 14 is a synchronizer ring 24 having an internal conical surface disposed radially outwardly of the clutch teeth 22.

Disposed between each of the gear assemblies 12,14 is a drive hub 28, which hub is provided with internal splines 30 in driving relationship with external splines 32 on the shaft 10. The hub 28 is also provided with external splines 34. Mounted on the drive hub 28 is an axially movable shift collar or sliding sleeve indicated generally at 36, this sliding sleeve being provided with internal splines 38 which are engaged by the external splines 34 on the drive hub 28. As is customary, the clutch teeth 22 can be placed in alignment with the external splines 34 on the hub, and the sliding sleeve 36 can be moved from a neutral position, such as that shown in Figure 1, to an engaged position wherein the internal splines 38 engage both the external splines 34 and the clutch teeth 22. As can be seen from Figure 1, the sliding sleeve is provided with an apertured disc-like peripheral portion 40, synchronizer blocking pin assemblies, indicated generally at 41, being disposed within the apertures. In order to move the sliding sleeve or shift collar 36, it is necessary to provide a shift fork, indicated generally at 42, the shift fork customarily being secured to a shift rail 44. As is well known in the art, when the shift rail is moved from a neutral position, such as that illustrated in Figure 1, in the direction of arrow 46, the gear 12 will be coupled to the drive hub 28. Similarly, when the shift rail 44 is moved in the direction of the arrow 48 the gear assembly 14 will be coupled with the drive hub 28.

Referring now to Figure 2, it can be seen that the shift fork of this invention includes a generally semicircular element 50 having diametrically opposed end portions 52,54. Shift rail mounting means, indicated generally at 56, is carried by the element between its end portions, the shift rail mounting means included an elongated aperture through which the shift rail 44 may be passed, and securing means, which may be in the form of a cap screw 58.

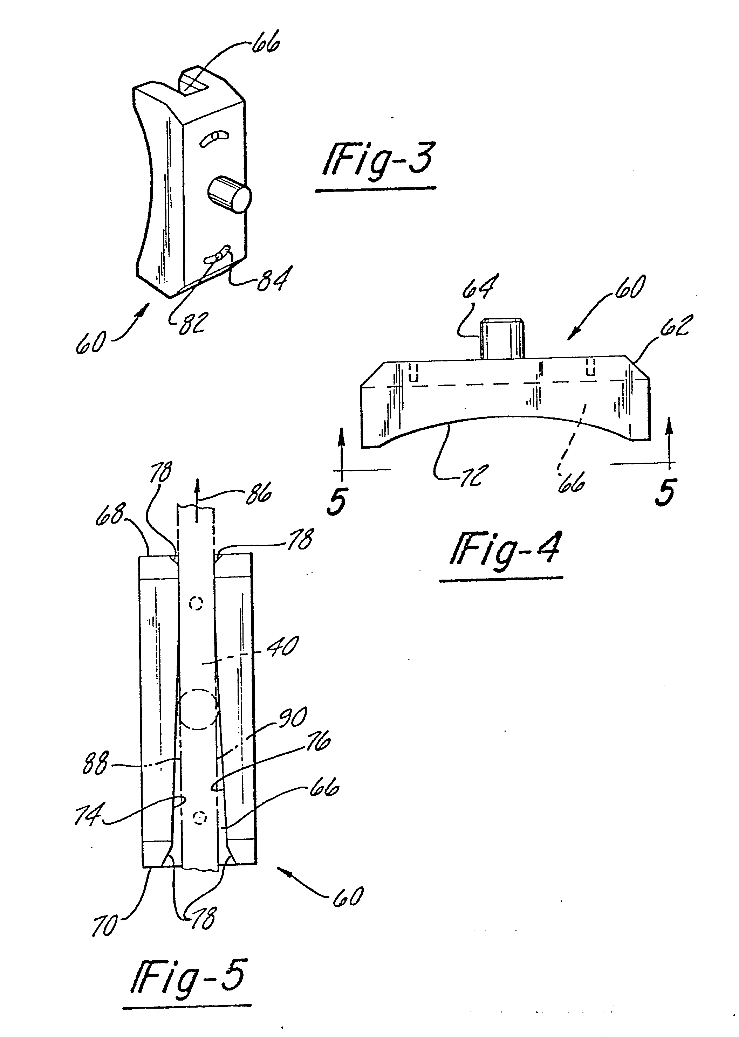

A pair of substantially identical shift fork pads, indicated generally at 60, is provided, the shift fork pads being best illustrated in Figures 3, 4 and 5. Each pad includes a grooved block 62 and an outwardly extending pin 64. In practice the block and pin are integral and made of the same material, namely a bearing material, such as bronze. However, it should be obvious, that the pin could be made separate from the grooved block, and could also be of a different material, such as for example steel. The groove within each of the blocks is indicated at 66 and extends from one end 68 of the block to the other end 70, the groove being open to one side 72 of the block. As can best be seen from Figure 2, the open sides 72 of the blocks face each other. The groove 66 has opposed side walls 74,76 and, as can be seen from Figure 5, the walls are tapered. The ends of the grooves are beveled at 78. Each of the pins 64 is received within a suitable aperture 80 in one of the end portions 52,54.

As can be appreciated the pad may pivot about the axis of the pin 64. However, pivot-limiting means are provided to limit the capability of the pads to pivot with respect to the end portions 52,54. This pivot-limiting means takes the form of a pin 82 carried by the fork, the pin 82 engaging an arcuate slot 84 in the pad 60. Conveniently the pin 82 may be press-fitted into a suitable aperture in the fork.

It should be noted that when the forks are assembled about the disc like peripheral portion 40, indicated in phantom in Figure 2, that the pins 64 and 82 will insure that the pads are mounted on the semicircular element 50 without danger of disassembly. By providing the pin 64, the pads 60 may rotate slightly to accommodate manufacturing tolerances thus facilitating assembly, the pin 82 preventing undue rotation of the pad 60 prior to assembly. Also, by making the pads separately from the element 50, it is possible to use both a high strength/low cost material, such as steel, for the major portion of the shift fork, and to use a good quality bearing material, such as bronze, for the shift fork pads to resist wear.

By making the pad grooves 66 wider at one end than the other it is possible to bring lubricating material into the pad grooves. In this connection it should be noted that the disc-like peripheral portion 40 will be rotating in the direction indicated by the arrow 86 with respect to the pad 60. As is customary in transmission design, oil is maintained within the transmission and the lower portion of the disc-like peripheral portion 40 will pass through the oil and bring oil up into the groove 66 causing the oil to constantly form a lubricating film between the right and left sides 88,90 of the disc-like portion 40 and the side walls 74,76 thus further reducing wear.

7

While a preferred structure in which the principles of the present invention have been incorporated is shown and described above, it is to be understood that the invention is not to be limited to the particular details, shown and described above, but that in fact, widely differing means may be employed in the practice of the broader aspects of this invention.

Claims

1. A shift fork (42) for use with a sliding sleeve (36)
   having a disc like peripheral portion (40); said fork
   comprising:
   a generally semicircular element (50) having diametrically opposed end portions (52,54);
   shift rail mounting means (56) carried by the element
   between its end portions, said shift rail mounting means
   being capable of securing the element to a shift rail
   (44) or the like;
   said fork being characterised by the provision of a pair
   of shift fork pads (60), each being provided with a
   groove (66) extending the length of the pad and open to
   one side thereof, said groove being wider at one end
   (70) than the other (68); and
   pad mounting means (64,80) capable of mounting each one
   of said pair of pads (60) on one of the end portions
   (52,54) with said one side of the pads facing each
   other.

2. A shift fork according to Claim 1 characterised in that
   said pad mounting means (64,80) pivotally mounts the
   pads on said opposed end portions (52,54).

3. A shift fork according to Claim 2 characterised by the
   provision of pivot-limiting means (82,84) extending
   between each of the pads (60) and the associated end
   portion (52,54) to limit the pivotal movement of the pad
   with respect to the end portion.

4.  A shift fork pad according to Claim 3 characterised in
    that said pivot-limiting means comprises a pin (82)
    carried by one of said pad (60) and said end portion
    (52,54) and an arcuate slot (84) in the other of said
    pad (60) and said end portion (52,54), said pin engaging said slot.

5.  A shift fork according to any one of claims 1 to 4 characterised in that said semicircular element (50) and
    said pads (60) are made of dissimilar metals, said element being of a relatively high strength material, and
    said pad being of a material having good bearing qualities.

6.  A shift fork constructed and arranged substantially as
    hereinbefore described with reference to and as shown in
    the accompanying drawings.

_Fig-1_

_Fig-2_

66

_Fig-3_

60    82    84

78    86

68    78

40

88    90    76

74    66

70    78

60

_Fig-5_

64    60

62

72    66

5    5

_Fig-4_

European Patent
Office

**EUROPEAN SEARCH REPORT**

0112546
Application number

## DOCUMENTS CONSIDERED TO BE RELEVANT

EP 83112819.4

| Category | Citation of document with indication, where appropriate, of relevant passages | Relevant to claim | CLASSIFICATION OF THE APPLICATION (Int. Cl. ³) |
|---|---|---|---|
| X | GB - A - 1 159 753 (SAVIEM) | 1 | G 05 G 3/00 |
| Y | * Totality * | 2,3 | |
| | -- | | |
| Y | DE - B1 - 2 425 514 (TATRA) | 2,3 | |
| | * Totality * | | |
| | -- | | |
| A | EP - A1 0 025 924 (RENAULT) | 5 | |
| | * Totality * | | |
| | -- | | |
| A | FR - A - 1 350 298 (DAIMLER) | 5 | |
| | * Totality * | | |
| | -- | | |
| A | GB - A - 1 148 157 (METALLGESELL-SCHAFT) | 5 | |
| | * Totality * | | |
| | -- | | |
| A | CH - A - 535 394 (TATRA) | | |
| | * Totality * | | |
| | ---- | | |

**TECHNICAL FIELDS SEARCHED (Int. Cl. ³)**

F 16 D 23/00
F 16 H 5/00
F 16 H 57/00
G 05 G 3/00

The present search report has been drawn up for all claims

| Place of search VIENNA | Date of completion of the search 07-03-1984 | Examiner SCHATEK |
|---|---|---|

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82